(19) Europäisches Patentamt
European Patent Office
Office européen des brevets

(11) **EP 0 968 087 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(21) Anmeldenummer: **98916826.5**

(22) Anmeldetag: **03.03.1998**

(51) Int Cl.⁷: **B41F 13/08**

(86) Internationale Anmeldenummer:
**PCT/DE98/00612**

(87) Internationale Veröffentlichungsnummer:
**WO 98/40214 (17.09.1998 Gazette 1998/37)**

(54) **ZYLINDER FÜR DRUCKMASCHINEN**

PRINTING PRESS CYLINDER

CYLINDRE POUR MACHINES A IMPRIMER

(84) Benannte Vertragsstaaten:
**BE CH DE ES FI FR GB IT LI NL SE**

(30) Priorität: **11.03.1997 DE 19709672**

(43) Veröffentlichungstag der Anmeldung:
**05.01.2000 Patentblatt 2000/01**

(73) Patentinhaber: **Koenig & Bauer Aktiengesellschaft**
**97080 Würzburg (DE)**

(72) Erfinder: **GLÖCKNER, Erhard, Herbert**
**D-97246 Eibelstadt (DE)**

(56) Entgegenhaltungen:
**EP-A- 0 519 301 DE-A- 4 426 627**
**US-A- 4 341 157 US-A- 5 365 842**

**Beschreibung**

Die Erfindung betrifft einen Zylinder für Druckmaschinen entsprechend dem Oberbegriff der Ansprüche 1, 2 und 16, sowie ein Verfahren zum Herstellen eines derartigen Zylinders gemäß Anspruch 15.

Es sind Walzen oder Zylinder unterschiedlicher Abmessungen für Druckmaschinen bekannt, welche aufgrund ihres Materialeinsatzes ein hohes Eigengewicht aufweisen.

Dies ist nicht nur vom hohen Materialeinsatz her gesehen nachteilig, sondern auch wegen des erforderlichen großen Energie- und Zeitaufwandes beim Beschleunigen oder Abbremsen der rotierenden Walzen oder Zylinder.

Weiterhin ist insbesondere von schlanken Zylindern, z. B. Plattenzylindern bekannt, daß der sog. "Kanalschlag" zu Schwingungen in radialer Richtung anregt, was u. a. zu Unruhen im Antrieb sowie zu Schwingungsstreifen und Druckaussetzern im Druckprodukt führt.

So sind z. B. gemäß DE-OS 30 12 060 schwingungsunempfindliche Zylinder für Druckmaschinen bekannt, die mehrstückig aufgebaut sind und bei denen Materialien verschiedener physikalischer Eigenschaften zur Schwingungsdämpfung verwendet werden.

Die DE 44 26 627 A1 beschreibt einen metallischen Verbundwerkstoff mit einem Kern aus porösem Metallwerkstoff.

Die US 43 41 157 A offenbart einen Zylinder für eine Druckmaschine. Dieser Zylinder weist Hohlräume auf, die zur Gewichtsreduzierung und Schwingungsdämpfung bei gleichzeitigem Erhalt der Festigkeit mit einem Dämpfungsmaterial ausgefüllt sind.

Der Erfindung liegt die Aufgabe zugrunde, einen Zylinder in einer Rotationsdruckmaschine mit guter Wärmeleitfähigkeit zu schaffen.

Diese Aufgabe wird erfindungsgemäß durch die Merkmale der Ansprüche 1, 2, 15 und 16 gelöst.

Die mit der Erfindung erzielbaren Vorteile bestehen darin, daß die Walzen oder Zylinder ein geringes Gewicht bei gleichzeitig geringer Durchbiegung sowie schwingungsdämpfende Eigenschaften aufweisen. Durch das Vorhandensein von Hohlräumen wird eine gute dämpfende Wirkung, z. B. gegen Kanalschläge, sowie ein geringes Gewicht erzielt. Somit wird ein rasches sowie energiearmes Beschleunigen oder Verzögern der Walzen oder Zylinder ermöglicht. Insbesondere bei einer von der laufenden Papierbahn angetriebenen Bahnleitwalze ist ein leichtgängiger sowie schlupfloser Antrieb von Vorteil. Infolge ihrer geringen Masse wird die Bahnleitwalze auch schon mittels einer laufenden viertelbreiten Papierbahn schlupflos angetrieben.

Dabei weist der Zylinder durch die Verwendung von Metallschaum eine gute Wärmeleitfähigkeit auf.

Durch die Wärmeleitfähigkeit des metallhaltigen Materials wird eine schnelle Ableitung der entstehenden Wärme von den Zylindern ermöglicht.

Durch die Verwendung von Metallschaum ist es möglich, das Gewicht und somit das Massenträgheitsmoment bei gleicher Durchbiegung im Vergleich zu herkömmlichen Zylindern zu reduzieren.

Ein Ausführungsbeispiel der Erfindung ist in der Zeichnung dargestellt und wird im folgenden näher beschrieben. Es zeigen:

Fig. 1     eine Vorderansicht eines schematisch dargestellten erfindungsgemäßen Zylinders mit einem rohrförmigen Mantel gemäß einem ersten Ausführungsbeispiel;

Fig. 2     einen Längsschnitt durch das linke Ende einer schematisch dargestellten Bahnleitwalze gemäß einem zweiten Ausführungsbeispiel.

Ein Zylinder 1 für eine Rotationsdruckmaschine besteht aus zwei Seitenscheiben 2; 3, welche mit einem rohrförmigen Mantel 4 fest verbunden sind. Der Mantel 4 kann beispielsweise einen Außenradius $r_a$ von 50 bis 300 mm und eine Wanddicke von z. B. vier bis zwölf Millimetern aufweisen und aus Eisenmetall, z. B. Stahl, oder Nichteisenmetall, z. B. Aluminium bestehen. Insbesondere ist das Verhältnis $r_i/r_a$ von Innenradius $r_i$ zu Außenradius $r_a$ des Mantels 4 kleiner gleich 0,92 ($r_i / r_a \leqq 0{,}92$). Innenradius $r_i$, Außenradius $r_a$, Länge l und maximale Durchbiegung $u_{max}$ des rohrförmigen Mantels 4 weisen folgende Abhängigkeit auf:

$$u_{max} = 1{,}25 \cdot 10^{-5} \, (l/r_a)^3 / (1-(r_i/r_a)^4).$$

Nach dieser Gleichung wird aus vorgegebener maximaler Durchbiegung $u_{max}$, Länge l und Außenradius $r_a$ für den mit Metallschaum gefüllten Zylinder 1 der zugehörige Innenradius $r_i$ festgelegt.

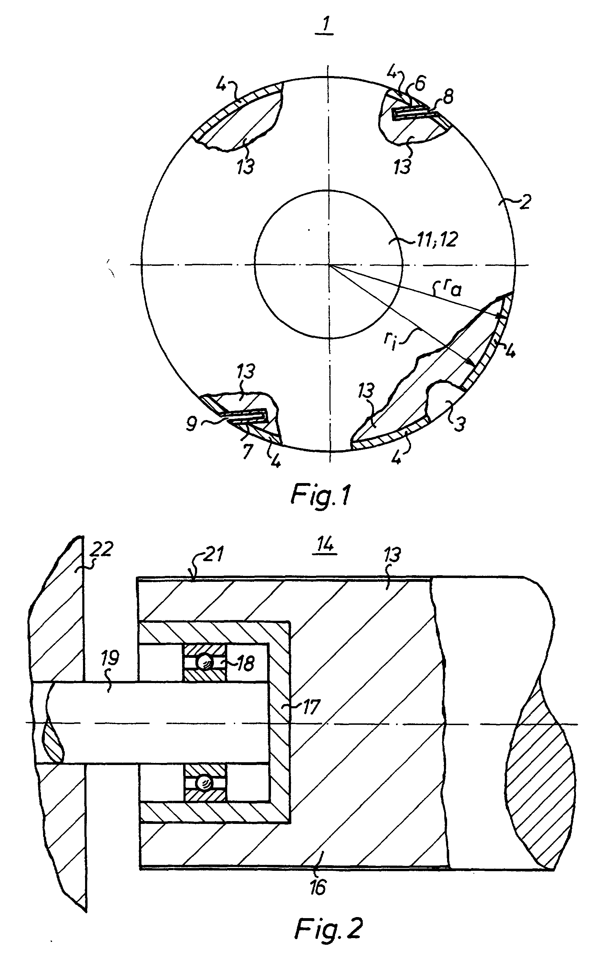

Am Umfang des Zylinders 1 können z. B. zwei die Seitenscheiben 2; 3 fest verbindende Traversen 6; 7 angeordnet sein, welche in axialer Richtung des Zylinders 1 verlaufende Schlitze 8; 9 aufweisen, z. B. zur Befestigung von abgekanteten Enden biegsamer Platten. Die Platten können als Druckplatten oder als eine Gummischicht tragende Platten, z. B. für einen Gummizylinder, ausgebildet sein. Außen an den Seitenscheiben 2; 3 sind jeweils drehfest Wellenzapfen 11; 12 befestigt (Fig. 1). Das Innere des Zylinders 1 ist mit Metallschaum 13 zumindest teilweise, vorzugsweise aber vollständig ausgefüllt, welcher später noch näher beschrieben wird.

Der Mantel 4 kann auch ohne Schlitze 8; 9 ausgeführt sein, z. B. als Gegendruckzylinder.

Nach einer anderen Ausführungsvariante weist ein Zylinder mit einem Durchmesser von ca. 80 bis 160 mm die Dimension einer Bahnleitwalze 14 auf. Die Bahnleitwalze 14 weist einen zylinderförmigen Zylinderballen auf, welcher aus Metallschaum 13 besteht.

Stirnseitig weist der Zylinderballen 16 jeweils Lagerbuchsen 17 und Kugellager 18 auf, worin jeweils ein seitengestellfester Achszapfen 19 eingreift.

Die Mantelfläche 21 des Zylinderballens 16 ist z. B. mit Kunststoff versiegelt (Fig. 2).

Die Zylinder 1; 14 können auch jeweils auf einer zwischen Seitengestellen 22 - nur eines in Fig. 2 dargestellt - fest eingespannten Achse drehbar gelagert sein (nicht dargestellt). Weiterhin ist es möglich, die in Fig. 2 gezeigten zwei Wellenzapfen 11; 12 z. B. durchgehend, d. h. fest miteinander zu verbinden und die Enden, wie beschrieben, im Seitengestell 22 drehbar zu lagern.

Metallschaum besteht aus einem porösen Metallkörper, welcher z. B. nach DE 40 18 360 C1 in nachfolgenden Verfahrensschritten hergestellt wird

a) Herstellen einer Mischung aus mindestens einem Metallpulver, z. B. Reinaluminium und mindestens einem gasabspaltenden Treibmittelpulver, z. B. einem Karbonat mit einem Anteil von 0,1 Gewichtsprozent.

b) Diese intensiv durchmischte Pulvermischung wird durch Heißpressen z. B. unter einem Druck von 60 MPa auf eine Temperatur von ca. 500°C erwärmt und etwa 30 Minuten gehalten. Es entsteht ein Halbzeug. Dabei werden die Metallpulverteilchen überwiegend durch Diffusionen verbunden. Der vorhandene Druck verhindert ein Zersetzen der Gasteilchen. Die miteinander verbundenen Metallteilchen haben die Gasteilchen des Treibmittels eingeschlossen.

c) Das auf diese Weise hergestellte Halbzeug wird z. B. in den rohrförmigen Mantel 4 eingegeben und auf eine Temperatur, z. B. 800°C gebracht, welche oberhalb der Zersetzungstemperatur des Treibmittels liegt. Das Halbzeug expandiert dabei und der so entstehende Metallschaum 13 füllt den rohrförmigen Mantel 4 aus und verschweißt dabei mit der Innenfläche des rohrförmigen Mantels 4.

d) Nachfolgend wird der innen aufgeschäumte Zylinder 1 abgekühlt. Die Porengröße liegt zwischen einem und drei Millimetern im Durchmesser.

Es ist auch möglich, daß das Aufschäumen des Halbzeuges nach Punkt c) ohne Form, d. h. Mantel 4, also frei erfolgt und nachfolgend eine Formgebung vorgenommen wird. Dies kann z. B. durch Umformen geschehen. Nach dem Herstellen eines Körpers, z. B. einer Bahnleitwalze 14 wird der Zylinderballen 16 beschichtet oder versiegelt. Dies kann z. B. mittels eines farbabweisenden Kunstharzes geschehen.

Die Lagerbuchsen 17 können ebenfalls mittels Kunstharz oder Klebstoff in stirnseitigen Bohrungen der Bahnleitwalze 14 (Fig. 2) befestigt werden.

Vorzugsweise besteht der Mantel 4 aus Stahl. Der Metallschaum 13 weist somit Eisenmetallbestandteile auf.

Bezugzeichenliste

1    Zylinder
2    Seitenscheibe (1)
3    Seitenscheibe (1)
4    Mantel (1)
5    -
6    Traverse (2; 3)
7    Traverse (2; 3)
8    Schlitz (1)
9    Schlitz (1)
10    -
11    Wellenzapfen (1)
12    Wellenzapfen (1)
13    Metallschaum (1; 14)
14    Bahnleitwalze
15    -
16    Zylinderballen (14)
17    Lagerbuchse (14)
18    Kugellager (14)
19    Achszapfen (14)
20    -
21    Mantelfläche (16)
22    Seitengestell

$r_i$    Innenradius des Mantels
$r_a$    Außenradius des Mantels

**Patentansprüche**

1.    Zylinder (1) oder Walze in einer Rotationsdruckmaschine mit einem rohrförmigen Mantel (4), **dadurch gekennzeichnet, daß** die Innenfläche des rohrförmigen Mantels (4) vollständig zur Ableitung von Wärme mit Metallschaum (13) verbunden ist.

2.    Zylinder (14) in einer Druckmaschine, **dadurch gekennzeichnet, daß** der Zylinderballen (16) aus Metallschaum (13) besteht und selbsttragend ausgebildet ist.

3.    Zylinder nach Anspruch 2, **dadurch gekennzeichnet, daß** die Mantelfläche (21) des Zylinderballens (16) versiegelt ist.

4.    Zylinder nach Anspruch 1, **dadurch gekennzeichnet, daß** der Zylinder (1) als Gummizylinder, Formzylinder oder Druckzylinder ausgebildet ist.

5.    Zylinder nach den Ansprüchen 2 und 3, **dadurch gekennzeichnet, daß** der Zylinder (14) als Bahnleitwalze (14) ausgebildet ist.

6.    Zylinder nach den Ansprüchen 1 bis 5, **dadurch ge-**

**kennzeichnet, daß** stirnseitig am Zylinder (1; 14) Lagerbuchsen (17) angeordnet sind, in welche seitengestellfeste Achszapfen (19) eingreifen.

7. Zylinder nach den Ansprüchen 1 bis 5, **dadurch gekennzeichnet, daß** jeweils stirnseitig am Zylinder (1; 14) ein Wellenzapfen (11; 12) angeordnet ist, daß jeder Wellenzapfen (11; 12) drehfest mit dem Zylinder (1; 14) verbunden ist.

8. Zylinder nach den Ansprüchen 1 bis 5, **dadurch gekennzeichnet, daß** der Zylinder (1; 14) auf einer seitengestellfesten Achse drehbar gelagert ist.

9. Zylinder nach Anspruch 7, **dadurch gekennzeichnet, daß** die Wellenzapfen (11; 12) fest miteinander verbunden sind.

10. Zylinder nach den Ansprüchen 1 oder 2, **dadurch gekennzeichnet, daß** der Metallschaum (13) aus einer Mischung von mindestens einem Metallpulver und mindestens einem gasabspaltenden Treibmittelpulver besteht.

11. Zylinder nach den Ansprüchen 1 oder 2, **dadurch gekennzeichnet, daß** der Metallschaum (13) aus einem porösen Metallkörper (13) besteht.

12. Zylinder nach den Ansprüchen 1 oder 2, **dadurch gekennzeichnet, daß** der Metallschaum (13) ganz, überwiegend oder teilweise aus Eisenmetall besteht.

13. Zylinder nach den Ansprüchen 1 oder 2, **dadurch gekennzeichnet, daß** der Metallschaum (13) ganz oder überwiegend aus Nichteisenmetall besteht.

14. Zylinder (1) nach Anspruch 1, **dadurch gekennzeichnet, daß** ein Verhältnis ($r_i/r_a$) von Innenradius $r_i$ zu Außenradius $r_a$ des rohrförmigen Mantels kleiner gleich 0,92 ist, d. h. $r_i/r_a \leq 0{,}92$.

15. Verfahren zur Herstellung eines in einer Rotationsdruckmaschine angeordneten Zylinders (1; 14) oder einer in einer Rotationsdruckmaschine angeordneten Walze, **gekennzeichnet durch** folgende Schritte:

   a) Herstellen einer Mischung aus mindestens einem Metallpulver und mindestens einem gasabspaltenden Treibmittelpulver;

   b) Heißpressen dieser Mischung zu einem Halbzeug bei einer Temperatur, bei der die Verbindung der Metallpulverteilchen überwiegend **durch** Diffusion erfolgt und bei einem Druck, der hoch genug ist, um die Zersetzung des Treibmittels zu verhindern, derart, daß die Metallteilchen sich in einer festen Verbindung untereinander befinden und einen gasdichten Abschluß für die Gasteilchen des Treibmittels darstellen;

   c) daß ein dabei entstandenes poröses Halbzeug in einen rohrförmigen Mantel (4) eingebracht und auf eine Temperatur, die oberhalb der Zersetzungstemperatur des Treibmittels im Temperaturbereich des Schmelzpunktes des verwendeten Metalles liegt, gebracht wird;

   d) daß die Innenfläche des Mantels (4) vollständig mit dem porösen Halbzeug zur Ableitung von Wärme im späteren Betrieb verbunden wird,

   e) daß der so aufgeschäumte Zylinder (1; 14) nachfolgend abgekühlt wird,

   f) daß der so hergestellte Zylinder (1; 14) oder die Walze in einer Rotationsdruckmaschine angeordnet ist.

16. Zylinder (1) oder Walze in einer Rotationsdruckmaschine mit einem rohrförmigen Mantel (4), **dadurch gekennzeichnet, daß** das Zylinderinnere zumindest teilweise mit Metallschaum (13) ausgefüllt ist, daß Innenradius $r_i$ des rohrförmigen Mantels, Außenradius $r_a$ des rohrförmigen Mantels, Länge l des rohrförmigen Mantels und maximale Durchbiegung $u_{max}$ des rohrförmigen Mantels folgende Abhängigkeit aufweisen:

$$u_{max} = 1{,}25 \cdot 10^{-5} \, (l/r_a)^3 / (1-(r_i/r_a)^4)$$

## Claims

1. Cylinder (1) or roll in a rotary printing machine, having a tubular cover (4), **characterized in that** the inner surface of the tubular cover (4) is completely bonded to metal foam (13) in order to dissipate heat.

2. Cylinder (14) in a printing machine, **characterized in that** the cylinder barrel (16) consists of metal foam (13) and is designed to be self-supporting.

3. Cylinder according to Claim 2, **characterized in that** the outer surface (21) of the cylinder barrel (16) is sealed.

4. Cylinder according to Claim 1, **characterized in that** the cylinder (1) is designed as a rubber-covered cylinder, forme cylinder or impression cylinder.

5. Cylinder according to Claims 2 and 3, **character-**

**ized in that** the cylinder (14) is designed as a web guide roll (14).

6. Cylinder according to Claims 1 to 5, **characterized in that** bearing bushes (17), in which axial journals (19) fixed to side frames engage, are arranged at the ends of the cylinder (1; 14).

7. Cylinder according to Claims 1 to 5, **characterized in that** a shaft journal (11; 12) is in each case arranged at the end of the cylinder (1; 14), and **in that** each shaft journal (11; 12) is firmly connected to the cylinder (1; 14) so as to rotate with it.

8. Cylinder according to Claims 1 to 5, **characterized in that** the cylinder (1; 14) is rotatably mounted on an axle fixed to side frames.

9. Cylinder according to Claim 7, **characterized in that** the shaft journals (11; 12) are firmly connected to each other.

10. Cylinder according to Claims 1 or 2, **characterized in that** the metal foam (13) consists of a mixture of at least one metal powder and at least one gas-liberating blowing agent powder.

11. Cylinder according to Claims 1 or 2, **characterized in that** the metal foam (13) consists of a porous metal body (13).

12. Cylinder according to Claims 1 or 2, **characterized in that** the metal foam (13) consists entirely, predominantly or partially of ferrous metal.

13. Cylinder according to Claims 1 or 2, **characterized in that** the metal foam (13) consists entirely or predominantly of non-ferrous metal.

14. Cylinder (1) according to Claim 1, **characterized in that** a ratio ($r_i/r_a$) of internal radius $r_i$ to external radius $r_a$ of the tubular cover is less than or equal to 0.92, that is to say $r_i/r_a \leq 0.92$.

15. Method for producing a cylinder (1; 14) arranged in a rotary printing machine or a roll arranged in a rotary printing machine, **characterized by** the following steps:

   a) production of a mixture of at least one metal powder and at least one gas-liberating blowing agent powder;

   b) hot pressing this mixture to form a semifinished product at a temperature at which the bonding of the particles of metal powder is predominantly carried out by diffusion and at a pressure which is sufficiently high to prevent the decomposition of the blowing agent, in such a way that the metal particles are in a fixed bond with one another and represent a gas-tight seal for the gas particles of the blowing agent;

   c) in that a porous semifinished product produced in the process is introduced into a tubular cover (4) and is brought to a temperature which lies above the decomposition temperature of the blowing agent in the temperature range of the melting point of the metal used;

   d) in that the inner surface of the cover (4) is bonded completely to the porous semifinished product in order to dissipate heat during subsequent operation,

   e) in that the cylinder (1; 14) foamed in this way is subsequently cooled down,

   f) in that the cylinder (1; 14) or the roll produced in this way is arranged in a rotary printing machine.

16. Cylinder (1) or roll in a rotary printing machine, having a tubular cover (4), **characterized in that** the cylinder interior is at least partly filled with metal foam (13), **in that** the internal radius $r_i$ of the tubular cover, external radius $r_a$ of the tubular cover, length I of the tubular cover and maximum deflection $u_{max}$ of the tubular cover exhibit the following dependence:

$$u_{max} = 1.25 \cdot 10^{-5} \, (l/r_a)^3 / (1-(r_i/r_a)^4).$$

**Revendications**

1. Cylindre (1) ou rouleau dans une machine à imprimer rotative avec une enveloppe (4) à forme tubulaire, **caractérisé en ce que** la surface intérieure de l'enveloppe (4) tubulaire est complètement reliée à une masse alvéolaire métallique (13) ayant comme but d'évacuer la chaleur.

2. Cylindre (14) dans une machine à imprimer, **caractérisé en ce que** le corps ou table (16) du cylindre est réalisé en masse alvéolaire métallique (13) et est de nature autoporteuse.

3. Cylindre selon la revendication 2, **caractérisé en ce que** la surface d'enveloppe (21) du corps ou table (16) du cylindre est scellée.

4. Cylindre selon la revendication 1, **caractérisé en ce que** le cylindre (1) est réalisé sous la forme de cylindre porte-blanchet, de cylindre porte-clichés ou de cylindre d'impression.

**5.** Cylindre selon les revendications 2 et 3, **caractérisé en ce que** le cylindre (14) est réalisé sous la forme de cylindre de guidage de bande (14).

**6.** Cylindre selon les revendications 1 à 5, **caractérisé en ce que** frontalement sur le cylindre (1; 14) sont disposés des douilles à palier (17) dans lesquelles s'engagent des tourillons d'axe (19) fixés à des bâtis latéraux.

**7.** Cylindre selon les revendications 1 à 5, **caractérisé en ce qu'**à chaque fois frontalement sur le cylindre (1; 14) est disposé un tourillon d'arbre (11; 12), **en ce que** chaque tourillon d'arbre (11; 12) est relié, de façon assujettie en rotation, au cylindre (1; 14).

**8.** Cylindre selon les revendications 1 à 5, **caractérisé en ce que** le cylindre (1; 14) est monté à rotation sur un axe fixé à des bâtis latéraux.

**9.** Cylindre selon la revendication 7, **caractérisé en ce que** les tourillons d'arbre (11; 12) sont reliés ensemble rigidement.

**10.** Cylindre selon la revendication 1 ou 2, **caractérisé en ce que** la masse alvéolaire métallique (13) est formée d'un mélange d'au moins une poudre métallique et d'au moins une poudre d'agent gonflant, produisant du gaz suite à sa décomposition.

**11.** Cylindre selon les revendications 1 ou 2, **caractérisé en ce que** la masse alvéolaire métallique (13) est formée d'un corps métallique (13) poreux.

**12.** Cylindre selon les revendications 1 ou 2, **caractérisé en ce que** la masse alvéolaire métallique (13) est formée en totalité, principalement ou partiellement, d'un métal ferreux.

**13.** Cylindre selon les revendications 1 ou 2, **caractérisé en ce que** la masse alvéolaire métallique (13) est constituée, en totalité ou principalement, d'un métal non ferreux.

**14.** Cylindre (1) selon la revendication 1, **caractérisé en ce que** le rapport $(r_i/r_a)$, entre le rayon intérieur $r_i$ et le rayon extérieur $r_a$ de l'enveloppe tubulaire, est inférieur ou égal à 0,92, c'est-à-dire $r_i/r_a \leq 0,92$.

**15.** Procédé de fabrication d'un cylindre (1; 14) disposé dans une machine à imprimer rotative, ou bien d'un rouleau disposé dans une machine à imprimer rotative, **caractérisé par** les étapes suivantes :

    a) fabrication d'un mélange d'au moins une poudre métallique et d'au moins une poudre d'agent gonflant, produisant du gaz par décomposition;

    b) pressage à chaud de ce mélange pour former un produit semi-fini à une température pour laquelle la liaison des particules de poudre métalliques est effectuée principalement par diffusion et à une pression suffisamment élevée pour empêcher la décomposition de l'agent gonflant, de manière que les particules métalliques se trouvent entre elles en une liaison ferme et forment une encapsulation étanche aux gaz pour les particules de gaz de l'agent gonflant;

    c) en ce qu'un semi-produit poreux, alors formé, est inséré dans une enveloppe (4) tubulaire et porté à une température supérieure à la température de décomposition de l'agent gonflant, dans la plage de température du point de fusion du métal utilisé;

    d) la surface intérieure de l'enveloppe (4) est reliée complètement au produit semi-fini poreux dans le but d'évacuer la chaleur lors du fonctionnement ultérieur;

    e) le cylindre (1; 14) dont le volume est ainsi rendu alvéolaire est ensuite refroidi;

    f) le cylindre (1; 14) ou le rouleau ainsi fabriqué, est disposé dans une machine à imprimer rotative.

**16.** Cylindre (1) ou rouleau dans une machine à imprimer rotative avec une enveloppe (4) tubulaire, **caractérisé en ce que** l'intérieur du cylindre est rempli au moins partiellement de masse alvéolaire métallique (13), **en ce que** le rayon intérieur $r_i$ de l'enveloppe tubulaire, le rayon extérieur $r_a$ de l'enveloppe tubulaire, la longueur l de l'enveloppe tubulaire et la flèche maximale $u_{max}$ de l'enveloppe tubulaire sont impliqués dans la relation suivante:

$$u_{max} = 1,25 \cdot 10^{-5} \, (l/r_a)^3 \, / \, (1-(r_i/r_a)^4).$$

Fig. 1

Fig. 2